# EUROPEAN PATENT APPLICATION

(11) **EP 3 188 200 A1**
(43) Date of publication of application: **05.07.2017**
(21) Application number: 14900473.1
(22) Date of filing: 28.08.2014
(51) Int. Cl.: H01F 7/00

(54) **STEEL MAGNET BODY ASSEMBLY**

(71) Applicant: Shenzhen Zhichan Vibration Machinery Co., Ltd., Shenzhen, Guangdong 518104 (CN)
(72) Inventor: GONG, Shugang, Shenzhen Guangdong 518104 (CN); HU, Shiwei, Shenzhen Guangdong 518104 (CN); CHEN, Yaping, Shenzhen Guangdong 518104 (CN); ZHAO, Jigao, Shenzhen Guangdong 518104 (CN); LI, Changliang, Shenzhen Guangdong 518104 (CN)
(74) Representative: Wright, Howard Hugh Burnby
(86) International application number: PCT/CN2014/085432
(87) International publication number: WO 2016/029408

(57) **Abstract**

A steel magnet body assembly comprises a first magnetizer (1) and a second magnetizer (2) that are magnetically conductive, and comprises multiple steel magnets (3). A magnetically insulative fixing member (4) used for fixing the steel magnets (3) are disposed between the first magnetizer (1) and the second magnetizer (2). The first magnetizer (1), the fixing member (4) and the second magnetizer (2) are sequentially stacked. The multiple steel magnets (3) are fixed in the fixing member (4) in an evenly spaced manner. Each steel magnet (3) is a column having an N magnetic pole and an S magnetic pole, and the N magnetic pole and the S magnetic pole of the steel magnet (3) are relatively disposed on two sides of a plane where the central axis of the column of the eel magnet (3) is located. The steel magnet body assembly enables a steel magnet to be conveniently magnetized, and enables the tensity of a magnetic field to be uniform after the magnetization. The steel magnet body assembly also has a high residual magnet ism, a high coercivity and a high magnetic energy product, and the stability and sensitivity of the steel magnet body assembly are improved.

## Description

### Technical Field

The present application relates to the field of magnetic steel structures, and more particularly, to a steel magnet body assembly.

### Background

China has rich resource of rare earth, and the cost performance of permanent magnetic material increases continually; especially, the rapid development of NdFeB permanent magnet material provides a support for the marketization of permanent magnet motors and trumpet magnetic steels. For example, a permanent magnet motor uses permanent magnet material for excitation, under the condition of having the same performance, the permanent magnet motor can be smaller than a conventional motor by one or two frame sizes, its advantages on the volume and weight are obvious, its motor efficiency is high, and its market potential is huge. An existing magnet steel structure usually uses a fixing manner of adhering a plurality of magnetic steels together, the magnetic steel structure fixed in this way may result in a non-uniform and non-concentric magnetic field intensity after being magnetized; when such a magnetic steel structure is used in a sensor, it may affect the reliability and the sensitivity of the sensor, even be unable to transmit information. In addition, at present, when a magnetic steel annulus is fabricated, it may be limited by a large / small or complex multi-curved body and thus is inconvenient to be magnetized, or even is unable to be magnetized.

### Summary

The present application aims to provide a steel magnet body assembly, which is configured to solve the problem in the prior art that a conventional magnet steel structure usually adopts a fixing manner of adhering a plurality of magnetic steels, such that the magnetic steel structure has a non-uniform magnetic field intensity after being magnetized, and is inconvenient to be magnetized, or even is unable to be magnetized.

The present application can be realized as follows: a steel magnet body assembly, which comprises a first magnetizer and a second magnetizer which are magnetic conducting, and a number of magnetic steels; wherein, a fixing member configured to fix the magnetic steels is arranged between the first magnetizer and the second magnetizer, the fixing member has a magnetic isolation characteristic, the first magnetizer, the fixing member and the second magnetizer are sequentially stacked, the plurality of magnetic steels are fixed in the fixing member in an evenly spaced distribution manner; each of the magnetic steels is a column having an N magnetic pole and an S magnetic pole, and the N magnetic pole and the S magnetic pole of the magnetic steel are oppositely disposed on two sides of a plane where a central axis of the column of the magnetic steel is located.

Further, the S magnetic pole of each of the magnetic steels is close to and faces one side of the first magnetizer, and the N magnetic pole of each of the magnetic steels is close to and faces one side of the second magnetizer; alternatively, the S magnetic pole of each of the magnetic steels is close to and faces one side of the second magnetizer, and the N magnetic pole of each of the magnetic steels is close to and faces one side of the first magnetizer.

Further, the structure of the magnetic steel is a cylinder or a prism.

Further, the fixing member defines a plurality of fixing grooves configured to fix the magnetic steels, and the plurality of fixing grooves are distributed evenly and spacedly on the fixing member, and the magnetic steels are fixed in the fixing grooves correspondingly.

Preferably, both the first magnetizer and the second magnetizer are annular-shaped, the first magnetizer is disposed within the circle of the second magnetizer, and the fixing member is disposed in an annular gap formed by stacking the first magnetizer and the second magnetizer.

Further, the fixing member is an annular structure adapted to the annular gap.

Preferably, both the first magnetizer and the second magnetizer are arc-shaped, and the fixing member is disposed in an arc-shaped gap formed by stacking the first magnetizer and the second magnetizer.

Further, the fastener is an arc structure adapted to the arc-shaped gap.

Compared with the prior art, in the steel magnet body assembly in the present application, the magnetic steel is designed as a column structure, the N magnetic pole and the S magnetic pole thereof are oppositely disposed on two sides of the plane where the central axis of the column of the magnetic steel is located, and then the plurality of magnetic steels are fixed in the fixing member evenly and spacedly. In this way, the magnetization of the magnet steels is convenient, the magnetic field intensity after magnetization is uniform, a high remanent magnetism, a high coercive force and a high magnetic energy product are achieved, and the stability and the sensitivity of the steel magnet body assembly are improved.

### Brief description of the drawings

Figure 1 is a schematic exploded view of an annular steel magnet body assembly according to an embodiment of the present application;
Figure 2 is a schematic perspective view of an annular steel magnet body assembly according to an embodiment of the present application;
Figure 3 is a structural schematic diagram of a radially magnetized steel magnet body assembly according to an embodiment of the present application;
Figure 4 is a schematic perspective view of a curved arc-shaped steel magnet body assembly according to an embodiment of the present application;
Figure 5 is a schematic view of the arrangement of magnetic steels in an annular steel magnet body assembly according to an embodiment of the present invention;
Figure 6 is an enlarged view of the part A in figure 5;
Figure 7 is a schematic view of applying a steel magnet body assembly according to an embodiment of the present application in a multiphase switched reluctance motor;
Figure 8 is a schematic cutaway view of an annular steel magnet body assembly according to an embodiment of the present application;
Figure 9 is a schematic view of a steel magnet body assembly with dark iron pieces in various shapes embedded therein according to other embodiments of the present application.

### Detailed Embodiments

In order to make the objectives, technical solutions and advantages of the present application be clearer, the present application will be further described in detail hereinafter with reference to the accompanying drawings and embodiments. It should be understood that embodiments described here are only intended to interpret the present application but not to limit the application.

The implementation of the present application will be described in detail with reference to specific embodiments.

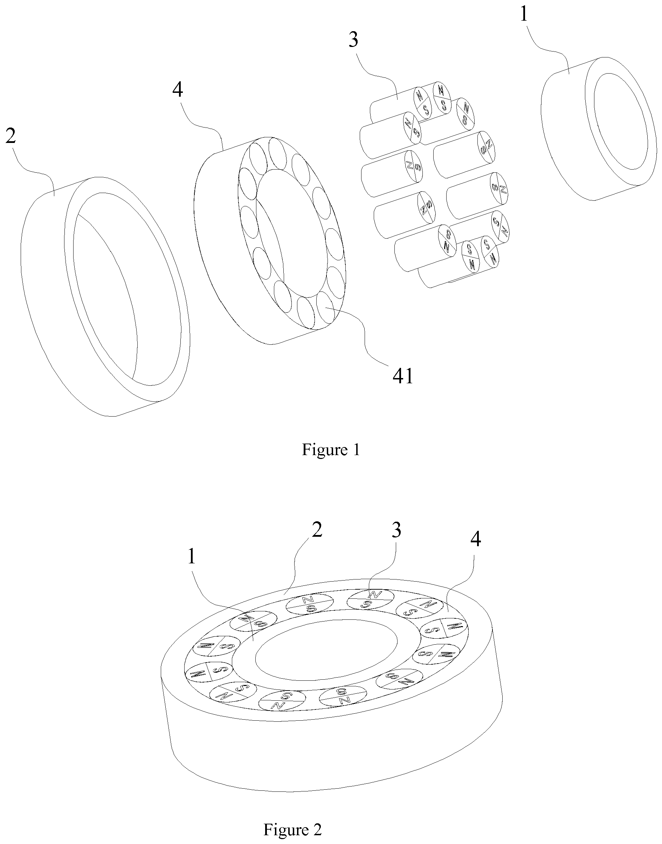

Figures 1∼9 show preferable embodiments of the present application.

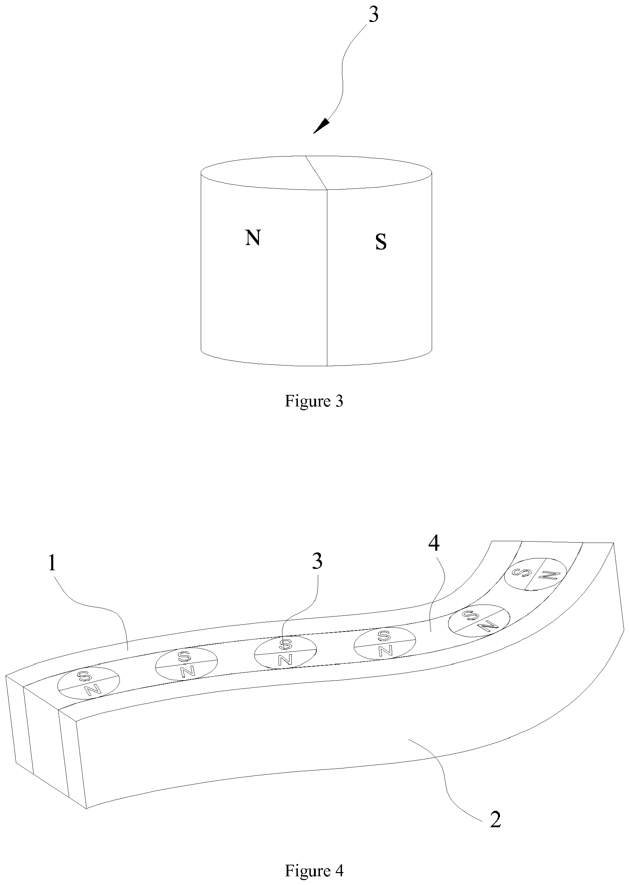

A steel magnet body assembly of the present application comprises a first magnetizer 1, a second magnetizer 2, a fixing member 4 and a plurality of magnetic steels 3; wherein, both the first magnetizer 1 and the second magnetizer 2 have a magnetic conducting characteristic, the fixing member 4 has a magnetic isolation characteristic, the fixing member 4 is fixedly disposed between the first magnetizer 1 and the second magnetizer 2, and the first magnetizer 1, the fixing member 4 and the second magnetizer 2 are sequentially stacked; the plurality of magnetic steels 3 are all fixedly mounted in the fixing member 4, the plurality of magnetic steels 3 are distributed in the fixing member 4 evenly and spacedly, and a central axis of each magnetic steel 3 is parallel with the central axes of the first magnetizer 1 and the second magnetizer 2; in addition, referring to Figure 3, each magnetic steel 3 is a column having an N magnetic pole and an S magnetic pole, here, a plane where a central axis of the column of the magnetic steel 3 is located is the interface between the N magnetic pole and the S magnetic pole, that is, the N magnetic pole and the S magnetic pole of the magnetic steel 3 are oppositely disposed on two side of the interface, one side of the interface of the column is the N magnetic pole, and the opposite side is the S magnetic pole.

By adopting the above-described steel magnet body assembly, the following features can be obtained:
in the steel magnet body assembly in this embodiment, each magnetic steel 3 is designed as a column structure, and the N magnetic pole and the S magnetic pole of the magnetic steel 3 are oppositely disposed on two sides of the plane where the central axis of the column of the magnetic steel 3 is located, the plane is the interface between the N magnetic pole and the S magnetic pole, that is, two sides of the interface are respectively the N magnetic pole and the S magnetic pole; moreover, a plurality of such magnetic steels 3 are fixed in the fixing member 4 evenly and spacedly, so that it is convenient to magnetize the magnetic steels 3 of the steel magnet body assembly and the magnet field intensity after magnetization is uniform; the steel magnet body assembly further has a high remanent magnetism, a high coercive force, and a high magnetic energy product, such that the stability, the sensitivity ,and the information transmission capability of the steel magnet body assembly are improved when it is used in a sensor.

In this embodiment, when a plurality of aforesaid magnetic steels 3 are fixed in the fixing member 4, the S magnetic poles of the plurality of magnetic steels 3 are all arranged to be close to and face one side of the first magnetizer 1, meanwhile, the N magnetic poles of the plurality of magnetic steels 3 are all arranged to be close to and face one side of the second magnetizer 2; since the first magnetizer 1 and the second magnetizer 2 are magnetic conducting and the fixing member 4 is magnetic isolating, after magnetization, the first magnetizer 1 becomes the S magnetic pole of the whole steel magnet body assembly, and the second magnetizer 2 becomes the N magnetic pole of the whole steel magnet body assembly;
alternatively, the S magnetic poles of each magnetic steels 3 are close to and face one side of the second magnetizer 2, meanwhile, the N magnetic poles of the plurality of magnetic steels 3 are all arranged to be close to and face one side of the first magnetizer 1; since the first magnetizer 1 and the second magnetizer 2 are magnetic conducting and the fixing member 4 is magnetic isolating, after magnetization, the second magnetizer 2 becomes the S magnetic pole of the whole steel magnet body assembly, and the first magnetizer 1 becomes the N magnetic pole of the whole steel magnet body assembly. Using the above-mentioned first magnetizer 1 and second magnetizer 2 as the two magnetic poles of the whole steel magnet body assembly can ensure the uniformity and the sensitivity of the magnet intensity with an annular geometrical shape, and the steel magnet body assembly can be used well in any automatic adjustment control device with an annular geometry.

In this embodiment, the structure of the above-mentioned magnetic steel 3 has a cylindrical shape; of course, depending on the actual situations and needs, in other embodiments, the above-mentioned magnet steel 3 could also be column structures having other shapes, such as a square column.

Further, in the present embodiment, the fixing member 4 defines a plurality of fixing grooves 41 configured to receive the magnetic steels 3, here, the number of fixed grooves 41 are equal to the number of the magnetic steels 3. Here, the plurality of fixing grooves 41 are arranged along the longitudinal direction of the fixing member 4, the fixing grooves 41 are evenly spaced, and each magnetic steel 3 is fixed in a corresponding fixing groove 41, which means that the plurality of magnetic steels 3 are uniformly strung together by the fixing member 4 so as to form two magnetic pole faces.

With reference to Figures 1, 2, as an embodiment, both the first magnetizer 1 and the second magnetizer 2 are annular structures, a diameter of the first magnetizer 1 is smaller than that of the second magnetizer 2, and the first magnetizer 1 is disposed within the annular ring of the second magnetizer 2; of course, they are kept being stacked and located in the same plane, and the aforesaid fixing member 4 is fixedly disposed in an annular gap formed between the first magnetizer 1 and the second magnetizer 2; of course, according to actual situations and requirements, in other embodiments, the first magnetizer 1 and the second magnetizer 2 may be structures having other shapes, and are not limited to these annular structures.

Further, in this embodiment, the aforesaid fixing member 4 is an annular structure which is adapted to the annular gap formed between the first magnetizer 1 and the second magnetizer 2, and two side walls of the fixing member 4 abut against inner walls of the first magnetizer 1 and the second magnetizer 2 respectively so as to be integrated; of course, according to actual situations and requirements, in other embodiments, the fixing member 4 can also be structures with other shapes.

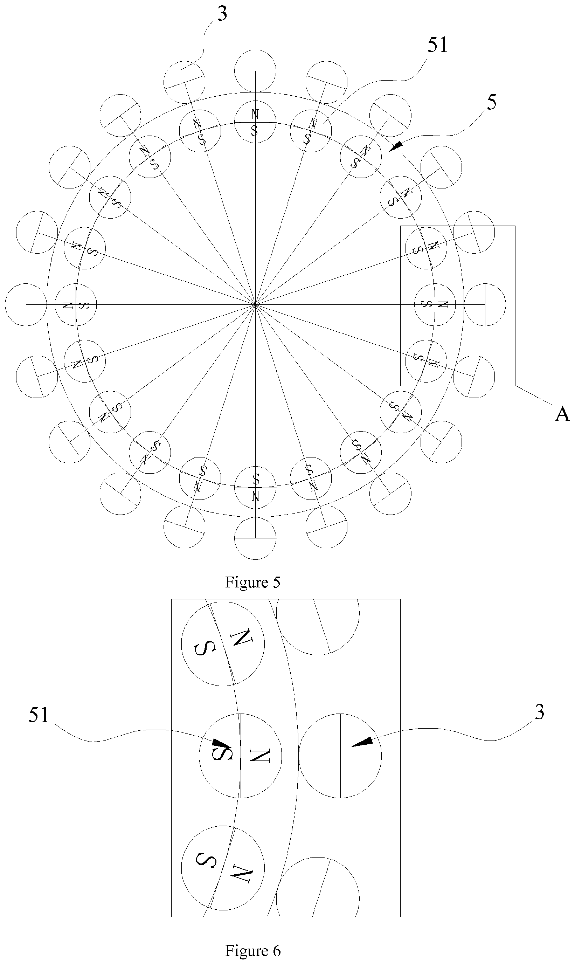

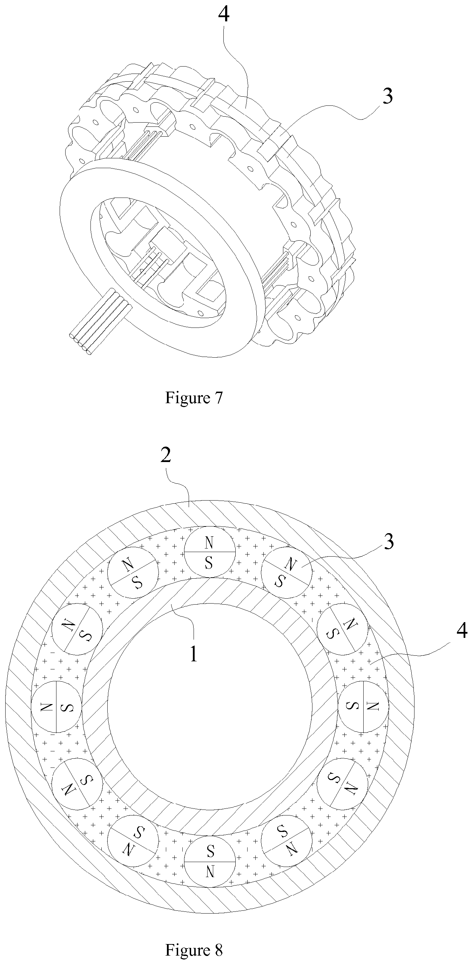

In this embodiment, in order to ensure the concentricity of fixing the magnetic steels 3 in the fixing member 4 and the uniformity of the magnet intensity, referring to figures 5, 6, a second magnetic steel 51 having a magnetic field intensity and corresponding to the magnetic steel 3 is placed on a tooling 5 for producing a steel magnet body assembly, before injection molding steel magnet, each of the magnetic steels 3 is placed stably, and it is ensured that the interface of each of the magnetic steels 3 is perpendicular to a central axis of the magnet steel ring formed by the plurality of magnetic steels 3; here, the interface is a plane formed by the boundary lines between the N magnetic poles and the S magnetic poles of magnetic steels 3. It is ensured that the boundary lines are the tangent lines of the magnet steel ring, in this way, when the second magnetic steels 51 with magnetic induction is applied on the magnetic steels 3 without any magnetic field, the most powerful magnetic force lines generated by the magnetic steel ring formed by the second magnetic steels 51 are all directed to the center of the ring, such that the magnetic field of the steel magnet body assembly after magnetization is more uniform and concentric. Arranging the magnetic steels 3 by this method solves the problem that magnetic steel ring bodies produced currently are inconvenient to be magnetized or even unable to be magnetized due to the limitation of large / small or complex multi-curved bodies; in addition, referring to figure 7, a steel magnet body assembly according to this embodiment is very feasible in launching and speed adjustment of a multiphase switched reluctance motor.

With reference to Figure 4, as another embodiment, the first magnetizer 1 and the second magnetizer 2 have curved arc-shaped structures, the first magnetizer 1 is disposed beside one side of the second magnetizer 2, they are stacked and located in the same plane, and the aforesaid fixing member 4 is fixedly disposed in an arc-shaped gap formed between the first magnetizer 1 and the second magnetizer 2; of course, according to actual situations and requirements, in other embodiments, the first magnetizer 1 and the second magnetizer 2 may also be structures having other shapes, and are not limited to the arc structures.

Further, in this embodiment, the aforesaid fixing member 4 is a curved arc-shaped structure which is adapted to the arc-shaped gap formed between the first magnetizer 1 and the second magnetizer 2, and two sides of the fixing member 4 abut against inner walls of the first magnetizer 1 and the second magnetizer 2 respectively so as to be integrated; of course, according to actual situations and requirements, in other embodiments, the fixing member 4 can also be structures with other shapes.

In the magnetic component of this embodiment, the magnetic steel 3 is made of NdFeB permanent magnet material, and the first magnetizer 1 and the second magnetizer 2 are made of black iron.

In the steel magnet body assembly of the present application, a plurality of radially magnetized column-shaped magnetic steels 3 are used; these magnetic steels 3 are fixedly arranged in a uniform manner according to a curve, so as to form a magnetic ring or be combined as an arc-shaped magnetic steel structure with any curve shape; the arc-shaped magnet steel structure forms the two polarities of the curve, and thus the internal and external magnetic metals are used to abut against the curve, that is, the first magnetize 1 and second magnetizer 2 abut against inner and outer walls of the curve formed by the plurality of magnet steels 3, so as to introduce the magnetic poles into other space, and thus the change of the magnetic pole direction can easily and optionally alter the magnetic field intensity of the south (S) or the north (N) ; herein, any shape based on a circle is a special case of the present application. It is convenient and affordable to use such a special polarity manner, which can be widely used in various industries and technical fields, such as various sensors, instruments, electronics, electromechanics, medical services, education, automobiles, aviation, military, and so on, for example, speed regulation of motors, production of trumpet magnetic steels, and so on.

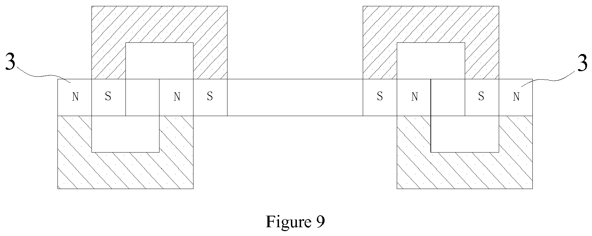

In other embodiments, referring to Figure. 9, the assembled integrated steel magnet body assembly comprises two polarized magnetic fields, i.e., an inner magnetic field and an outer magnetic field; the first magnetizer 1 and the second magnetizer 2 are removed, and black iron with different shapes are embedded in the two pole positions, in this way, the magnetic field intensity of the south (S) magnetic pole or the north (N) magnetic pole can be altered optionally and easily , such that the integral fixing structure of multiple discrete radially magnetized magnet steels is higher in efficiency and lower in cost.

The above description is only preferred embodiments of the present application, and is not intended to limit the present application. Any modification, equivalent substitution and improvement made within the spirit and principle of the present application should be included in the scope the present application.

## Claims

1. A steel magnet body assembly, which comprises a first magnetizer and a second magnetizer which are magnetic conducting, and a number of magnetic steels, wherein, a fixing member configured to fix the magnetic steels is arranged between the first magnetizer and the second magnetizer to fix the magnetic steels, the fixing member has a magnetic isolation characteristic, the first magnetizer, the fixing member and the second magnetizer are sequentially stacked, the plurality of magnetic steels are fixed in the fixing member in an evenly spaced distribution manner; each of the magnetic steels is a column having an N magnetic pole and an S magnetic pole, and the N magnetic pole and the S magnetic pole of the magnetic steel are oppositely disposed on two sides of a plane where a central axis of the column of magnetic steel is located.

2. A steel magnet body assembly according to claim 1, wherein, the S magnetic pole of each of the magnetic steels is close to and faces one side of the first magnetizer, and the N magnetic pole of each of the magnetic steels is close to and faces one side of the second magnetizer; alternatively, the S magnetic pole of each of the magnetic steels is close to and faces one side of the second magnetizer, the N magnetic pole of each of the magnetic steels is close to and faces one side of the first magnetizer.

3. A steel magnet body assembly according to claim 2, wherein, the structure of the magnetic steel is a cylinder, or a prism.

4. A steel magnet body assembly according to claim 3, wherein, the fixing member defines a plurality of fixing grooves configured to fix the magnetic steels, and the plurality of fixing grooves are distributed evenly and spacedly on the fixing member, and the magnetic steels are fixed in the fixing grooves correspondingly.

5. A steel magnet body assembly according to any one of claims 1∼4, wherein, both the first magnetizer and the second magnetizer are annular-shaped, the first magnetizer is disposed within the circle of the second magnetizer, and the fixing member is disposed in an annular gap formed by stacking the first magnetizer and the second magnetizer.

6. A steel magnet body assembly according to claim 5, wherein, the fixing member is an annular structure adapted to the annular gap.

7. A steel magnet body assembly according to any one of claims 1∼4, wherein, both the first magnetizer and the second magnetizer are arc-shaped, and the fixing member is disposed in an arc-shaped gap formed by stacking the first magnetizer and the second magnetizer.

8. A steel magnet body assembly according to claim 7, wherein, the fixing member is an arc structure adapted to the arc-shaped gap.
